# FASCICULE DE BREVET EUROPEEN

(11) **EP 2 411 346 B1**
(45) Date de publication et mention de la délivrance du brevet: **24.07.2013**
(21) Numéro de dépôt: 10717226.4
(22) Date de dépôt: 23.03.2010
(51) Int. Cl.: C04B 28/14, C04B 28/16, C04B 24/24

(54) **Fluidifiant pour liant à base de sulfate de calcium**
Verflüssiger für Gipsbasierte Bindemittel
Fluidifier for binders based on calcium sulfate

(30) Priorité: 25.03.2009 FR 0901395; 09.09.2009 FR 0904295
(43) Date de publication de la demande: 01.02.2012
(73) Titulaire: Lafarge Gypsum International, 92210 St Cloud (FR)
(72) Inventeur: FAURE, Jean-Michel, F-69600 Oullins (FR); WATT, Olivier, F-38110 Saint Jean de Soudain (FR); RINALDI, David, F-69003 Lyon (FR); YAHIAOUI, Hakimi, F-69780 Mions (FR)
(74) Mandataire: Berruet, Laure
(86) Numéro de dépôt international: PCT/IB2010/000994
(87) Numéro de publication internationale: WO 2010/109335

(56) Documents cités:
- EP-A1- 1 767 504
- EP-A1- 1 975 136
- DE-A1-102005 022 843
- FR-A1- 2 763 065
- JP-A- 11 079 811
- JP-A- 2000 327 386

## Description

La présente invention a pour objet l'utilisation de fluidifiant dans des liants hydrauliques, en particulier les liants hydrauliques à base de sulfate de calcium.

Les fluidifiants représentent aujourd'hui une solution dans la démarche économique de réduction d'« eau perdue » engagée dans les usines de plaques de plâtre. Afin de réduire les coûts engendrés par le séchage des plaques et augmenter les cadences de production, cette réduction d'eau est devenue indispensable. Cependant la mise en oeuvre de pâtes de plâtre contenant moins d'eau devient vite difficile, voire impossible, la viscosité augmentant fortement lorsque le rapport eau / plâtre diminue. Dans ces conditions, les fluidifiants représentent dans certains cas une solution efficace pour abaisser cette viscosité.

Les fluidifiants connus à ce jour sont par exemple les Poly Mélamine Sulfonates (PMS), les Poly Naphtalène Sulfonates (PNS) qui sont le plus largement utilisés en usine, leur performance économique étant relativement faible. Des molécules de type PCP (Poly Carboxylate Poly(oxyalkylène)) ont été développées et représentent une alternative intéressante aux PMS et PNS. Mais bien que l'efficacité des PCP soit supérieure à celle des PMS et PNS, le surcoût engendré par leur utilisation est trop important par rapport au gain de performance obtenu.

Il est également connu du document JP 2000 327386 des composés utilisés comme dispersant et fluidifiant pour les coulis de ciments et mortiers. Ces composés sont des copolymères synthétisés à partir d'un monomère ayant au moins un radical phosphate (1) et d'un monomère ayant un radical polyoxyalkylène (2).

Afin de répondre aux exigences des utilisateurs, il est devenu nécessaire de trouver d'autres molécules pour fluidifier des pâtes de plâtre.

Aussi le problème que se propose de résoudre l'invention est de fournir un nouvel adjuvant adapté pour fluidifier les compositions de liants hydrauliques, en particulier liants hydrauliques à base de sulfate de calcium.

De manière inattendue, les inventeurs ont mis en évidence qu'il est possible d'utiliser des copolymères comprenant des motifs monomères polyoxyalkylés et des motifs monomères phosphorés pour obtenir un adjuvant utile en tant que fluidifiant pour les liants hydrauliques, en particulier liants hydrauliques à base de sulfate de calcium.

Dans ce but la présente invention propose l'utilisation d'au moins un copolymère ou un de ses sels en tant que fluidifiant pour liants hydrauliques à base de sulfate de calcium choisi parmi les plâtres à base de sulfate de calcium hemihydraté (α ou β ou un mélange des deux) ou les liants à base de sulfate de calcium anhydre, ledit copolymère comprenant au moins un motif de formule (I) 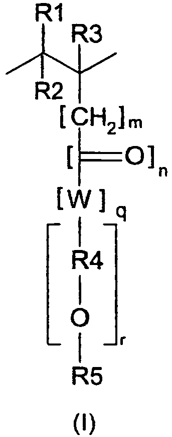 et ledit copolymère comprenant au moins un motif de formule (II) 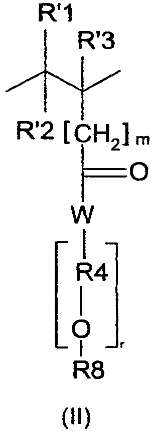 R1, R2, R3 représentent indépendamment un atome d'hydrogène, un radical alkyle linéaire ou ramifié en C₁ à C₂₀, ou un radical phényle ;
R'1, R'2, R'3 représentent indépendamment un atome d'hydrogène, un radical alkyle linéaire ou ramifié en C₁ à C₂₀, ou un radical phényle, ou un radical -COOR9 avec R9 représentant indépendamment un atome d'hydrogène, un radical alkyle linéaire ou ramifié en C₁ à C₄ ou un ion monovalent divalent ou trivalent ou un radical ammonium quaternaire;
R4 représente un radical alkyle linéaire ou ramifié en C₂ à C₂₀ ;
R5 représente un radical de formule 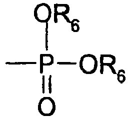 R6 représente indépendamment un atome d'hydrogène, un radical alkyle linéaire ou ramifié en C₁ à C₂₀, ou un ion monovalent divalent ou trivalent, ou un radical ammonium quaternaire;
ou encore R5 représente un radical de formule 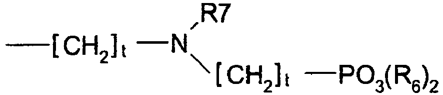 R7 représente un atome d'hydrogène, un radical alkyle linéaire ou ramifié en C₁ à C₁₈, ou un radical de formule -[CH₂]ₜ -PO₃(R₆)₂ R8 représente un atome d'hydrogène ou un radical alkyle linéaire ou ramifié en C₁ à C₂₀;
W représente indépendamment un atome d'oxygène ou un radical NH;
m est un nombre entier compris de 0 à 2 ;
n est un nombre entier égal à 0 ou 1 ;
q est un nombre entier égal à 0 ou 1 ;
r est un nombre entier compris de 1 à 300 ;
t est un nombre entier compris de 0 à 18 ;
et ledit copolymère comprenant au moins un motif de formule (III)
choisi parmi les acides carboxyliques insaturés tels que les monomères insaturés d'acide monocarboxylique ou dicarboxylique, tels que l'acide acrylique, l'acide méthacrylique, l'acide maléique, l'anhydride maléique, l'acide fumarique, l'acide itaconique, l'anhydride itaconique, l'acide citraconique, et leurs sels de métaux monovalents, divalents, d'ammonium quaternaire ou leurs sels d'amine organique ;
dont la masse molaire dudit copolymère est comprise 15 000 à 250 000 daltons, ledit copolymère ne comprenant pas de motifs réticulant, c'est-à-dire de motifs comportant au moins deux fonctions ayant polymérisées pour conduire à la réticulation des chaînes polymères ;
et ledit copolymère selon l'invention comprenant :
- de 20 à 80 % de motifs (I);
- de 5 à 35 % de motifs (II);
- de 20 à 60% de motif (III)
les pourcentages étant exprimés en nombre d'unités de motifs par rapport au nombre total de motifs présents dans le copolymère.

L'invention propose également un liant hydraulique à base de sulfate de calcium comprenant au moins ledit copolymère ou un de ses sels.

Enfin, l'invention propose des éléments pour le domaine de la construction obtenus à partir d'un liant hydraulique à base de sulfate de calcium comprenant au moins ledit copolymère ou un de ses sels.

L'invention offre comme avantage que le fluidifiant utilisé selon l'invention permet de formuler des pâtes de plâtre en utilisant des quantités d'eau réduites par rapport aux quantités classiquement utilisées.

L'invention offre comme autre avantage que le fluidifiant utilisé selon l'invention permet de réduire l'eau engagée dans les usines et nécessaire pour la fabrication de plaques de plâtre.

De plus, le fluidifiant utilisé selon l'invention présente comme avantage de ne pas ou de peu retarder l'hydratation des liants hydrauliques, et notamment des liants hydrauliques à base de sulfate de calcium partiellement anhydre ou totalement anhydre.

Un autre avantage de la présente invention, est l'absence ou la quasi absence de formaldehyde résiduelle, ce qui n'est pas le cas des PMS ou des PNS.

Un autre avantage de la présente invention, est que le fluidifiant utilisé selon l'invention permet de maîtriser la fluidité des pâtes de plâtre sans en modifier les autres propriétés.

L'invention offre comme autre avantage que le fluidifiant utilisé selon l'invention permet de fluidifier aussi bien les plâtres issus de gypse naturel ou synthétique.

Enfin l'invention a pour avantage de pouvoir être mise en oeuvre dans toutes industries, notamment l'industrie du bâtiment, l'industrie chimique (adjuvantiers) et à l'ensemble des marchés de la construction (bâtiment, génie civil ou usine de préfabrication), à l'industrie de la construction d'éléments en plâtre.

D'autres avantages et caractéristiques de l'invention apparaîtront clairement à la lecture de la description et des exemples donnés à titre purement illustratifs et non limitatifs qui vont suivre.

Par le terme « adjuvant », on entend selon la présente invention tout composé qui incorporé dans une formulation permet d'apporter des propriétés particulières.

Par le terme « liant », on entend selon la présente invention tout composé ayant la propriété d'apporter de la cohésion à la formulation dans laquelle il est incorporé, et permet d'apporter des caractéristiques mécaniques à ladite formulation (par exemple résistance en compression, en traction, adhérence). Ce liant peut également être destiné à lier des éléments inertes tels que des granulats.

Par l'expression « liants hydrauliques », on entend selon la présente invention tout composé ayant la propriété de s'hydrater en présence d'eau et dont l'hydratation permet d'obtenir un solide ayant des caractéristiques mécaniques. L'expression liant hydraulique désigne également les liants hydriques. Le liant hydraulique selon l'invention peut en particulier être un liant à base de sulfate de calcium ou un ciment. De préférence, le liant hydraulique selon l'invention est un liant à base de sulfate de calcium.

Par l'expression « liants hydrauliques à base de sulfate de calcium », on entend selon l'invention les liants hydrauliques à base de sulfate de calcium partiellement anhydre ou totalement anhydre.

Par les termes suivants, on entend selon la présente invention :
- Gypse ou sulfate de calcium hydraté : CaSO₄•2(H₂O);
- Plâtre ou sulfate de calcium semihydrate ou sulfate de calcium hémihydraté ou sulfate de calcium partiellement anhydre: CaSO₄•0.5H₂O ;
- Sulfate de calcium anhydre ou anhydrite (type II ou type III) ou sulfate de calcium totalement anhydre : CaSO₄.

Par l'expression « pâte de plâtre », on entend selon la présente invention un mélange d'eau et de plâtre, moussée ou non moussée, et éventuellement d'autres composés (par exemple, des charges, des adjuvants etc...). L'expression pâte de plâtre désigne également les coulis ou des mortiers.

Par l'expression « copolymère », on entend selon l'invention un polymère comprenant la répétition d'au moins 2 motifs monomères distincts, voire plus. Ainsi un copolymère selon l'invention peut comprendre la répétition de 3 motifs monomères distincts.

Par l'expression « motif réticualnt », on entend selon l'invention un motif comportant au moins deux fonctions ayant polymérisées pour conduire à la réticulation des chaînes polymères.

Par l'expression « prise », on entend selon la présente invention le passage à l'état solide par réaction chimique.

Par l'expression « fluidifiant », on entend selon la présente invention tout adjuvant permettant de fluidifier.

Par l'expression « éléments pour le domaine de la construction », on entend selon la présente invention tout élément constitutif d'une construction comme par exemple une plaque de plâtre, un sol, une chape, un mur, une cloison, une contre-cloison, un doublage acoustique ou thermique, un plafond, une poutre, un plan de travail, une corniche, un enduit, un plâtre à projeter, les plâtres médicaux, les moules pour coulage de métaux ou de figurines, les plâtres dits industriels.

L'invention concerne l'utilisation d'au moins un copolymère ou un de ses sels en tant que fluidifiant pour liants hydrauliques à base de sulfate de calcium choisi parmi les plâtres à base de sulfate de calcium hemihydraté (α ou β ou un mélange des deux) ou les liants à base de sulfate de calcium anhydre, ledit copolymère comprenant au moins un motif de formule (I) 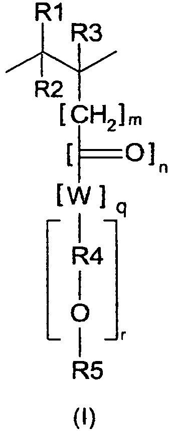 et ledit copolymère comprenant au moins un motif de formule (II) 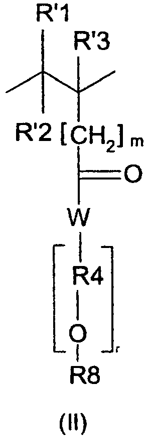 R1, R2, R3 représentent indépendamment un atome d'hydrogène, un radical alkyle linéaire ou ramifié en C₁ à C₂₀, ou un radical phényle ;
R'1, R'2, R'3 représentent indépendamment un atome d'hydrogène, un radical alkyle linéaire ou ramifié en C₁ à C₂₀, ou un radical phényle, ou un radical -COOR9 avec R9 représentant indépendamment un atome d'hydrogène, un radical alkyle linéaire ou ramifié en C₁ à C₄ ou un ion monovalent divalent ou trivalent ou un radical ammonium quaternaire;
R4 représente un radical alkyle linéaire ou ramifié en C₂ à C₂₀ ;
R5 représente un radical de formule 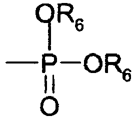 R6 représente indépendamment un atome d'hydrogène, un radical alkyle linéaire ou ramifié en C₁ à C₂₀, ou un ion monovalent divalent ou trivalent, ou un radical ammonium quaternaire;
ou encore R5 représente un radical de formule 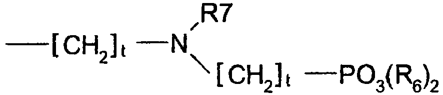 R7 représente un atome d'hydrogène, un radical alkyle linéaire ou ramifié en C₁ à C₁₈, ou un radical de formule -[CH₂]ₜ -PO₃(R₆)₂ R8 représente un atome d'hydrogène ou un radical alkyle linéaire ou ramifié en C₁ à C₂₀ ;
W représente indépendamment un atome d'oxygène ou un radical NH;
m est un nombre entier compris de 0 à 2 ;
n est un nombre entier égal à 0 ou 1 ;
q est un nombre entier égal à 0 ou 1 ;
r est un nombre entier compris de 1 à 300 ;
t est un nombre entier compris de 0 à 18 ;
et ledit copolymère comprenant au moins un motif de formule (III)
choisi parmi les acides carboxyliques insaturés tels que les monomères insaturés d'acide monocarboxylique ou dicarboxylique, tels que l'acide acrylique, l'acide méthacrylique, l'acide maléique, l'anhydride maléique, l'acide fumarique, l'acide itaconique, l'anhydride itaconique, l'acide citraconique, et leurs sels de métaux monovalents, divalents, d'ammonium quaternaire ou leurs sels d'amine organique ; dont la masse molaire dudit copolymère est comprise 15 000 à 250 000 daltons, ledit copolymère ne comprenant pas de motifs réticulant, c'est-à-dire de motifs comportant au moins deux fonctions ayant polymérisées pour conduire à la réticulation des chaînes polymères ; et ledit copolymère selon l'invention comprenant :
- de 20 à 80 % de motifs (I);
- de 5 à 35 % de motifs (II);
- de 20 à 60% de motif (III)
les pourcentages étant exprimés en nombre d'unités de motifs par rapport au nombre total de motifs présents dans le copolymère.

Il est clair que le nombre entier m du motif (I) et le nombre entier m du motif (II) sont indépendants, et peuvent être identiques ou différents. Le même principe s'applique aussi aux nombres entier q et r.

Le copolymère selon l'invention n'est pas un polymère réticulé, obtenu par utilisation de monomères réticulants.

Il est clair que les nombres entiers t du radical R5 du motif (I) peuvent être identiques ou différents.

Il est clair que W du motif (I) et W du motif (II) sont indépendants, et peuvent être identiques ou différents. Le même principe s'applique aussi pour R4.

De préférence, le copolymère utilisé selon l'invention ou un de ses sels possède un radical R1 représentant un atome d'hydrogène.

De préférence, le copolymère utilisé selon l'invention ou un de ses sels possède un radical R2 représentant un atome d'hydrogène.

De préférence, le copolymère utilisé selon l'invention ou un de ses sels possède un radical R3 représentant un radical méthyle.

De préférence, le copolymère utilisé selon l'invention ou un de ses sels possède un radical R4 représentant un radical éthyle.

De préférence, le copolymère utilisé selon l'invention ou un de ses sels possède un radical R5 représentant un radical de formule

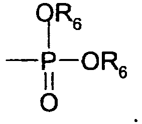

De préférence, le copolymère utilisé selon l'invention ou un de ses sels possède un radical R6 représentant un atome d'hydrogène.

De préférence, le copolymère utilisé selon l'invention ou un de ses sels possède un radical R8 représentant un atome d'hydrogène ou un radical méthyle.

De préférence, le copolymère utilisé selon l'invention ou un de ses sels possède un atome W représentant un atome d'oxygène.

De préférence, le copolymère utilisé selon l'invention ou un de ses sels possède un nombre entier r compris de 1 à 300, de préférence compris de 20 à 250, plus préférentiellement compris de 40 à 200, encore plus préférentiellement compris de 40 à 150.

Selon l'invention, le copolymère utilisé selon l'invention comprend au moins un motif de formule (I), au moins un motif de formule (II) et au moins un motif (III), ledit motif (III) étant choisi parmi les acides carboxyliques insaturés tels que les monomères insaturés d'acide monocarboxylique ou dicarboxylique, tels que l'acide acrylique, l'acide méthacrylique, l'acide maléique, l'anhydride maléique, l'acide fumarique, l'acide itaconique, l'anhydride itaconique, l'acide citraconique, et leurs sels de métaux monovalents, divalents, d'ammonium quaternaire ou leurs sels d'amine organique. Selon cette variante, le motif (III) préféré est l'acide méthacrylique.

Selon l'invention, le copolymère utilisé selon l'invention comprend au moins un motif de formule (II), au moins un motif de formule (1) possédant un radical R5 de formule soit 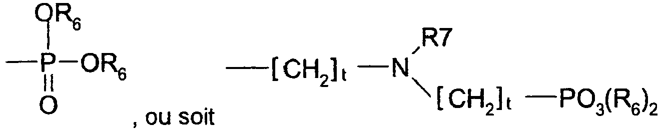 et au moins un motif (III).

Le motif (III) peut être choisi parmi ceux mentionnés ci-dessus.

Le copolymère utilisé selon l'invention ne comprend pas de motifs réticulant.

De préférence, le copolymère utilisé selon l'invention ne comprend pas de motifs provenant de monomères choisi parmi les exemples suivants :
- les (poly)alkylene glycol di(meth)acrylates tels que triethylene glycol di(meth)acrylate, (poly)ethylene glycol di(meth)acrylate, polypropylene glycol di(meth)acrylate, et (poly)ethylene glycol (poly)propylene glycol di(meth)acrylate;
- les (meth)acrylates multifunctionels tels que hexanediol di(meth)acrylate, trimethylolpropane tri(meth)acrylate, et trimethylolpropane di(meth)acrylate;
- les (poly)alkylene glycol dimaléates tels que triethylene glycol dimaleate et polyethylene glycol dimaleate.

De préférence, le copolymère utilisé selon l'invention ne comprend pas de motifs provenant de monomères choisi parmi les exemples suivants : 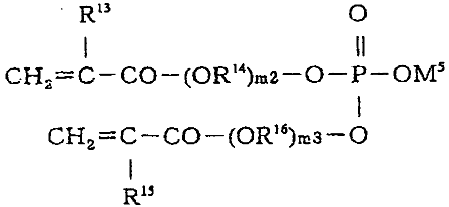 avec R13, R14, R15, R16, M m2 et m3 tel que définis dans la demande EP 1 975 136.

Le copolymère selon l'invention ou un de ses sels peut être utilisé en tant que fluidifiant, en particulier en tant que fluidifiant pour les ciments ou les liants hydrauliques à base de sulfate de calcium.

Plus particulièrement le copolymère utilisé selon l'invention va permettre de formuler des pâtes de plâtre contenant moins d'eau et de maîtriser la fluidité de ladite pâte.

En particulier, le copolymère selon l'invention ou un de ses sels peut être utilisé comme fluidifiant pour les liants hydrauliques à base de sulfate de calcium choisi parmi les sulfates de calcium partiellement anhydre ou totalement anhydre. Parmi les liants hydrauliques à base de sulfate de calcium, les plâtres à base de sulfate de calcium semihydraté (α ou β ou un mélange des deux) conviennent tout particulièrement selon l'invention.

Plus particulièrement, le copolymère selon l'invention ou un de ses sels peut être utilisé comme fluidifiant pour les liants hydrauliques à base de sulfate de calcium choisi parmi les plâtres à base de sulfate de calcium semihydraté (α ou β ou un mélange des deux) ou les liants à base de sulfate de calcium anhydre.

Avantageusement, le copolymère selon l'invention ou un de ses sels peut être utilisé comme fluidifiant pour les plâtres issus de gypse naturel ou synthétique. Notamment on peut citer parmi les gypses naturels la sélénite, l'albâtre, le gypse fibreux, le gypse sacharoïde, le gypse marin, la rose des sables. On peut citer parmi les gypses synthétiques le gypse de désulfuration, le phosphogypse (gypse issu de la fabrication de l'acide phosphorique), le titanogypse (gypse issu de la neutralisation de l'acide sulfurique produit lors du procédé de synthèse du dioxyde de titane), le citrogypse (gypse issu de la fabrication de l'acide citrique), le tartarogypse (gypse issu de la fabrication de l'acide tartrique), le borogypse (gypse issu de la fabrication de l'acide borique), le lactogypse (gypse issu de la fabrication de l'acide lactique).

Avantageusement, le copolymère selon l'invention ou un de ses sels peut être utilisé comme fluidifiant pour les plâtres à base de sulfate de calcium semihydraté contenant ou non des impuretés, telle que par exemple de l'argile.

Le copolymère selon l'invention ou un de ses sels peut présenter une structure chimique variée. En particulier, la répartition des motifs (I) et (II) ou des motifs (I) et (II) et (III) au sein du copolymère peut varier d'une molécule à une autre. Notamment le copolymère selon l'invention peut présenter une structure à bloc, statistique, alternée ou à gradient.

Par structure à bloc, on entend selon l'invention une structure comprenant des blocs distincts de chacun des motifs monomères.

Par structure statistique, on entend selon l'invention une structure comprenant les motifs monomères répartis de manière statistique ou encore aléatoire dans la chaîne polymère.

Par structure alternée, on entend selon l'invention une structure où les motifs monomères sont alternés dans la chaîne polymère.

Par structure à gradient, on entend selon l'invention une structure où la concentration de chaque motif monomère varie inversement proportionnelle l'une par rapport à l'autre.

De préférence, le copolymère utilisé selon l'invention présentera une structure statistique ou à gradient.

Encore plus préférentiellement, le copolymère utilisé selon l'invention présentera une structure statistique.

Le copolymère selon l'invention comprend :
- de 20 à 80 % de motifs (I) ;
- de 5 à 35 % de motifs (II) ;
- de 20 à 60% de motif (III) ;
les pourcentages étant exprimés en nombre d'unités de motifs par rapport au nombre total de motifs présents dans le copolymère.

Plus préférentiellement, le copolymère selon l'invention peut comprendre :
- 40 % de motifs (I);
- 20 % de motifs (II);
- 40 % de motif (III) ;
les pourcentages étant exprimés en nombre d'unités de motifs par rapport au nombre total de motifs présents dans le copolymère.

Le copolymère utilisé selon l'invention ou un de ses sels possèdent une masse molaire comprise de 15 000 à 250 000 daltons, de préférence comprise de 20 000 à 150 000 daltons, plus préférentiellement comprise de 20 000 à 100 000.

Le copolymère utilisé selon l'invention peut se présenter sous forme de sels ou sous forme acide, en totalité ou en partie. Les sels ou les ions convenant selon l'invention peuvent être choisi parmi les métaux tels que décrits dans la classification périodique des éléments, en particulier les métaux alcalins ou les métaux alcalino-terreux. D'autres métaux, comme les métaux de transition peuvent convenir également.

Les copolymères sont obtenus par copolymérisation, de préférence de type radicalaire de monomères appropriés. La copolymérisation peut être conduite de manière conventionnelle pour l'homme du métier.

Les copolymères selon l'invention peuvent également être obtenu par post-greffage telle que par post-estérification ou post-amidification de la chaîne principale, comme par exemple par post-greffage de fonction acide maléique.

Selon une variante de l'invention, le copolymère selon l'invention est réalisé à partir de monomère (I) de formule suivante :

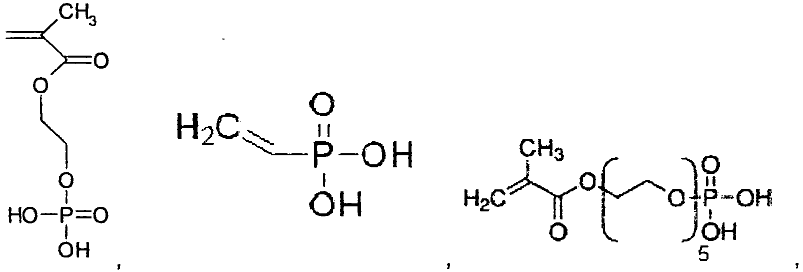

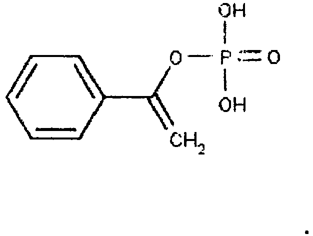

Encore plus préférentiellement, le copolymère selon l'invention est réalisé à partir de monomères (II) de formules suivantes :

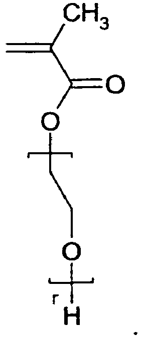

Selon une autre variante de l'invention, le copolymère selon l'invention est réalisé à partir de monomères (III) de formules suivantes :

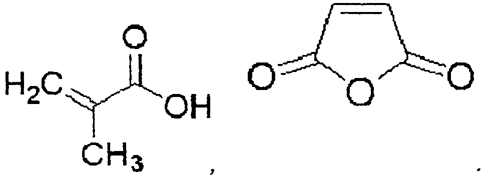

La concentration de copolymère utilisé selon l'invention dans la formulation dépend de l'application visée. Le copolymère selon l'invention peut être utilisé sous forme de solution liquide, par exemple une solution aqueuse, sous forme de dispersion, sous forme d'émulsion ou encore sous forme de poudre. De préférence le copolymère selon l'invention ou un de ses sels sera utilisé à une concentration comprise de 0,001 à 10 %, de préférence de 0,01 à 2%, plus préférentiellement de 0,01 à 1 %, encore plus préférentiellement de 0,01 à 0,5 %, en poids sec de copolymère par rapport au poids sec de liant hydraulique.

Enfin, le copolymère utilisé selon l'invention pourra être utilisé seul ou en association avec un ou plusieurs autres adjuvants tels qu'un accélérateur, retardateur, épaississant, agent rhéologique, charge minérale (par exemple du carbonate de calcium, gypse etc), inertant d'impuretés (par exemple des inertants des argiles) ou éventuellement un autre fluidifiant, afin d'ajuster les propriétés rhéologiques et de prise du matériau.

Avantageusement, le copolymère utilisé selon l'invention pourra être utilisé pour fluidifier des pâtes de plâtre comprenant un retardateur ou un accélérateur de la prise du plâtre.

Avantageusement, le copolymère utilisé selon l'invention pourra être utilisé pour fluidifier des pâtes de plâtre quelque soit la rhéologie de celle-ci, c'est-à-dire que la pâte de plâtre soit liquide, semi-liquide, semi-solide, plastique, moussée ou non-moussée.

Plus particulièrement l'invention a pour objet un liant hydraulique à base de sulfate de calcium comprenant au moins un copolymère ou un de ses sels selon l'invention.

Le copolymère utilisé selon l'invention ou un de ses sels peut être incorporé dans le liant hydraulique sous forme de solution liquide, sous forme de dispersion, sous forme d'émulsion ou encore sous forme de poudre.

Le liant hydraulique selon l'invention peut être utilisé pour la fabrication d'éléments pour le domaine de la construction, notamment pour tout élément constitutif d'une construction comme par exemple une plaque de plâtre, un sol, une chape, un mur, une cloison, une contre-cloison, un doublage acoustique ou thermique, un plafond, une poutre, un plan de travail, une corniche, un enduit, un plâtre à projeter.

Le liant hydraulique selon l'invention peut être utilisé pour la fabrication d'éléments pour le domaine de la construction, plus particulièrement pour la fabrication des plaques de plâtre.

Le copolymère utilisé selon l'invention ou un de ses sels peut être incorporé dans le liant hydraulique pendant la fabrication des plaques de plâtre, c'est-à-dire en usine au cours du procédé en ligne de fabrication des plaques de plâtre.

La fabrication de plaques de plâtre et plus particulièrement des plaques de plâtre présentant un coeur de gypse dont la densité évolue en fonction de la distance par rapport à la surface est connue. Il est connu de réaliser des plaques de plâtre présentant une couche de coeur de faible densité en intégrant des agents moussants dans la pâte. Cette couche de coeur est prise en sandwich par des couches de surface à haute densité. Les couches de plâtre de surface sont solidaires de feuilles de carton, le parement. Généralement, le dispositif pour fabriquer ce type de plaque, comprend :
- des moyens d'amenée d'un parement,
- un premier mixeur de préparation d'une première pâte de plâtre,
- des moyens d'application de la première pâte de plâtre sur un parement,
- des moyens d'étalement de cette première pâte de plâtre en une couche de surface crue sur le parement,
- un deuxième mixeur de préparation d'une deuxième pâte de plâtre,
- des moyens d'application de la deuxième pâte de plâtre sur la couche de surface crue,
- des moyens d'étalement de cette deuxième pâte de plâtre en une couche de coeur crue sur la couche de surface crue,
- des moyens de mise en forme d'une plaque de plâtre,
- un troisième mixeur de préparation d'une troisième pâte de plâtre,
- des moyens d'amenée d'un deuxième parement,
- des moyens d'application de la troisième pâte de plâtre par-dessus le deuxième parement,
- des moyens de retournement du deuxième parement,
- des moyens d'étalement en une deuxième couche de surface crue,
- des moyens d'application de la deuxième couche de surface crue sur la couche de coeur crue,
- des moyens d'entraînement du parement et des couches crues.

Le copolymère ou un de ses sels utilisé comme fluidifiant selon l'invention dans ce dispositif peut être incorporé directement dans les matières premières avant leurs arrivées dans les mixeurs sous quelques formes que ce soit (individuellement en mélange ou en pré-méange), ou encore peut être incorporé dans la pâte de plâtre présente dans les mixeurs.

La concentration de copolymère selon l'invention dans par exemple une pâte de plâtre dépend de l'application visée. De préférence le copolymère selon l'invention ou un de ses sels sera utilisé à une concentration comprise de 0,001 à 10 %, de préférence de 0,01 à 2%, plus préférentiellement de 0,01 à 1 %, encore plus préférentiellement de 0,01 à 0,5 %, en poids sec de copolymère par rapport au poids de la pâte de plâtre.

L'invention a également pour objet un liant hydraulique à base de sulfate de calcium comprenant au moins un copolymère ou un de ses sels selon l'invention.

L'invention a également pour autre objet des éléments pour le domaine de la construction obtenus à partir d'un liant hydraulique à base de sulfate de calcium comprenant au moins un copolymère ou un de ses sels selon l'invention.
La figure 1 représente le pouvoir de réduction d'eau.
La figure 2 présente l'évaluation du pouvoir fluidifiant d'un copolymère selon l'invention en comparaison de l'Ethacryl M.

Les exemples suivants illustrent l'invention sans en limiter la portée.

### EXEMPLES

### Exemple 1 : Synthèse d'un copolymère illustratif (copolymère 1)

Dans un réacteur double-enveloppe de 100mL, les réactifs suivants sont pesés :
- 2.88g de MEGP (Methacrylate ethylène glycol phosphate, origine Aldrich) de formule suivante 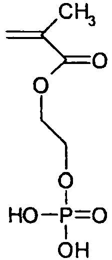
- 28.54g de MA-5000 (origine Clariant, solution aqueuse à 60%w) de formule suivante avec r = 110 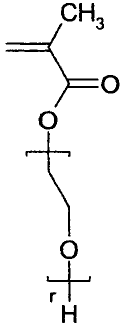
- 0.25g d'acide thioglycolique (ce qui représente 15%mol).

Un montage réactionnel est réalisé qui comprend une agitation mécanique, un réfrigérant, une arrivée d'azote, une sonde de température et le réacteur double-enveloppe. Le milieu réactionnel est mis à dégazer sous azote et est chauffé à 80°C à l'aide de la double-enveloppe. Après atteinte de la température de consigne et dégazage suffisant (environ 15 minutes), 0,05g de vazo68WSP (thermoamorceur d'origine Dupont) sous forme poudre sont ajoutés. Le milieu est laissé à réagir pendant 2h à 80°C.

Une solution de copolymère 1 est ainsi obtenue. Elle est laissée à refroidir puis neutralisée avec 1,1 g de NaOH en pastilles. Une solution aqueuse incolore limpide est obtenue, dont le pH est égal à 6.

La masse molaire en poids du copolymère 1 obtenu est de 40 000 daltons (Mw). Elle a été évaluée par chromatographie d'exclusion stérique (SEC) en phase aqueuse utilisant un étalonnage POE. Le copolymère 1 renferme en moyenne 20 % de motifs MA-5000 et 80 % de motifs MEGP.

### Exemple 2 : Synthèse d'un copolymère selon l'invention (copolymère 2)

Dans un réacteur double-enveloppe de 250mL, les réactifs suivants sont pesés :
- 4.8g de PAM 100^{®} (origine Rhodia) de formule suivante 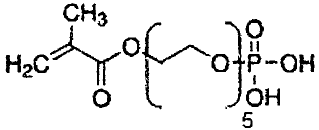
- 42.86g de MA-5000 (origine Clariant, solution aqueuse à 70%w)
- 1.03g d'acide méthacrylique (origine Aldrich)
- 120g d'eau du robinet
- 4.1g d'acide thioglycolique (origine Aldrich) en solution à 10% dans l'eau.

Un montage réactionnel est réalisé qui comprend une agitation mécanique, un réfrigérant, une arrivée d'azote, une sonde de température et le réacteur double-enveloppe. Le milieu réactionnel est mis à dégazer sous azote et est chauffé à 65°C à l'aide d'un bain d'huile. Après atteinte de la température de consigne et dégazage suffisant (environ 15 minutes), 2.52g d'une solution à 10% de V50 (thermoamorceur d'origine Dupont) sont ajoutés. Le milieu est laissé à réagir pendant 2h à 65°C. Le produit peut être neutralisé pour obtenir un pH égal à 6 grâce à une solution de soude à 50%.

La masse molaire en poids du copolymère 2 obtenu est de 30 000 daltons (Mw). Elle a été évaluée par chromatographie d'exclusion stérique (SEC) en phase aqueuse utilisant un étalonnage POE. Le copolymère 2 renferme en moyenne 20 % de motifs MA-5000 et 40 % de motifs PAM 100 et 40% de motifs methacrylique, % en nombre de motifs dans le copolymère.

Une solution de copolymère 2 est ainsi obtenue. La formule du copolymère 2 est la suivante 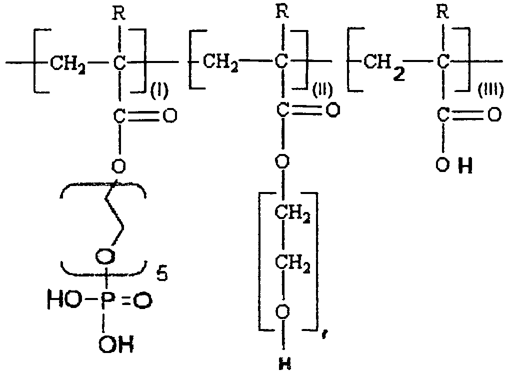 avec 40 % de motif (I), 20 % de motif (II) et 40 % de motif (III), et avec r = 110.

### Exemple 2 bis : Synthèse d'un copolymère selon l'invention (copolymère 2bis

Dans un réacteur double-enveloppe de 250mL, les réactifs suivants sont pesés :
- 6,4 g de PAM 100^{®} (origine Rhodia) de formule suivante 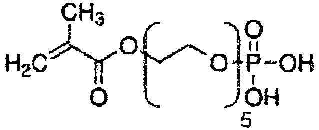
- 57,14g de MA-5000 (origine Clariant, solution aqueuse à 70%w)
- 1.38g d'acide méthacrylique (origine Aldrich)
- 120g d'eau du robinet
- 0,73g de pentaerythritoltetra(3-mercaptopropionate) (CAS 7575-23-7)

Un montage réactionnel est réalisé qui comprend une agitation mécanique, un réfrigérant, une arrivée d'azote, une sonde de température et le réacteur double-enveloppe. Le milieu réactionnel est mis à dégazer sous azote et est chauffé à 65°C à l'aide d'un bain d'huile. Après atteinte de la température de consigne et dégazage suffisant (environ 15 minutes), 3,25g d'une solution à 10% de V50 (thermoamorceur d'origine Dupont) sont ajoutés. Le milieu est laissé à réagir pendant 2h à 65°C. Le produit peut être neutralisé pour obtenir un pH égal à 6 grâce à une solution de soude à 50%.

La masse molaire en poids du copolymère 2bis obtenu est de 30 000 daltons (Mw). Elle a été évaluée par chromatographie d'exclusion stérique (SEC) en phase aqueuse utilisant un étalonnage POE. Le copolymère 2bis renferme en moyenne 20 % de motifs MA-5000 et 40 % de motifs PAM 100 et 40% de motifs methacrylique, % en nombre de motifs dans le copolymère.

Une solution de copolymère 2bis est ainsi obtenue. Il s'agit d'un polymère étoile.

### Exemple 3 : Synthèse d'un copolymère illustratif (copolymère 3)

Dans un réacteur double-enveloppe de 250mL, les réactifs suivants sont pesés :
- 5.04g de MEGP (origine Aldrich)
- 42.86g de MA-5000 (origine Clariant, solution aqueuse à 70%w)
- 100g d'eau du robinet
- 4.1g d'acide thioglycolique (origine Aldrich) en solution à 10% dans l'eau (ce qui représente 15%mol de monomère).

Le montage et le mode opératoire sont les mêmes que dans l'exemple 2.

La masse molaire en poids du copolymère 3 obtenu est de 30 000 daltons (Mw). Elle a été évaluée par chromatographie d'exclusion stérique (SEC) en phase aqueuse utilisant un étalonnage POE. Le copolymère 3 renferme en moyenne 20 % de motifs MA-5000 et 80 % de motifs MEGP, % en nombre de motifs dans le copolymère.

### Exemple 4 : Synthèse d'un copolymère illustratif (copolymère 4)

Dans un réacteur double-enveloppe de 250mL, les réactifs suivants sont pesés :
- 2.52g de MEGP
- 42.86g de MA-5000 (origine Clariant, solution aqueuse à 70%w)
- 2.95g sulfopropyl methacrylique (SPM) (origine Aldrich) de formule suivante : 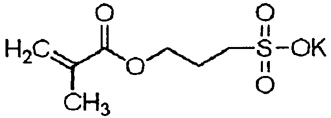
- 100g d'eau du robinet
- 4.1g d'acide thioglycolique (origine Aldrich) en solution à 10% dans l'eau (ce qui représente 15%mol de monomère).

Le montage et le mode opératoire sont les mêmes que dans l'exemple 2.

La masse molaire en poids du copolymère 4 obtenu est de 30 000 daltons (Mw). Elle a été évaluée par chromatographie d'exclusion stérique (SEC) en phase aqueuse utilisant un étalonnage POE. Le copolymère 4 renferme en moyenne 20 % de motifs MA-5000 et 40 % de motifs MEGP et 40% de motif SPM, % en nombre de motifs dans le copolymère.

### Exemple 5 : Synthèse d'un PCP (copolymère 5)

Dans un réacteur double-enveloppe de 250mL, les réactifs suivants sont pesés :
- 42.86g de MA-5000 (origine Clariant, solution aqueuse à 70%w)
- 2.06g d'acide méthacrylique
- 100g d'eau du robinet
- 4.1g d'acide thioglycolique (origine Aldrich) en solution à 10% dans l'eau (ce qui représente 15%mol de monomère).

La montage et le mode opératoire sont les mêmes que dans l'exemple 2.

La masse molaire en poids du copolymère 5 obtenu est de 30 000 daltons (Mw). Elle a été évaluée par chromatographie d'exclusion stérique (SEC) en phase aqueuse utilisant un étalonnage POE. Le copolymère 5 renferme en moyenne 20 % de motifs MA-5000 et 80 % de motifs méthacrylique, % en nombre de motifs dans le copolymère.

### Exemple 6 : Evaluation du pouvoir de réduction d'eau du copolymère 1 sur pâte liquide de semi-hydrate de sulfate de calcium :

La fluidité de la pâte liquide est évaluée au moyen du test dit de « l'anneau d'étalement ». Un cylindre (encore appelé anneau d'étalement) de taille bien définie (largeur 30mm - Hauteur 50mm) est positionné sur le plan de travail, de manière à ce que le volume délimité par l'intérieur du cylindre et le plan de travail forme une cavité. Cette cavité est complètement remplie de pâte liquide à tester. Puis le cylindre est soulevé délicatement. Alors la pâte liquide à tester s'étale sur le plan de travail. La surface d'étalement de la pâte liquide à tester est déterminée.

L'effet fluidifiant du copolymère 1 est évalué sur une pâte liquide de semi-hydrate de sulfate de calcium gâchée à un ratio Eau / Plâtre (E/P) donné.

Dans un bol plastique, on pèse l'eau, la quantité de retardateur de la prise (0,05%, % en masse sèche) et la quantité d'extrait sec de copolymère 1. Dans un autre bol, le semi-hydrate est pesé (100g). Les quantités d'eau et de solution de copolymère 1 dépendent du ratio E/P et du dosage désiré pour l'essai. Au temps zéro, le semi-hydrate est ajouté doucement à l'eau adjuvantée du copolymère 1. Après 1 minute et 30 secondes de contact, un premier malaxage de 30 secondes est réalisé à la cuillère. Le coulis est laissé à reposer 30 secondes avant un second malaxage de 30 secondes. Au terme de ce deuxième malaxage, la fluidité du coulis est évaluée par le test de l'anneau d'étalement décrit ci-dessus.

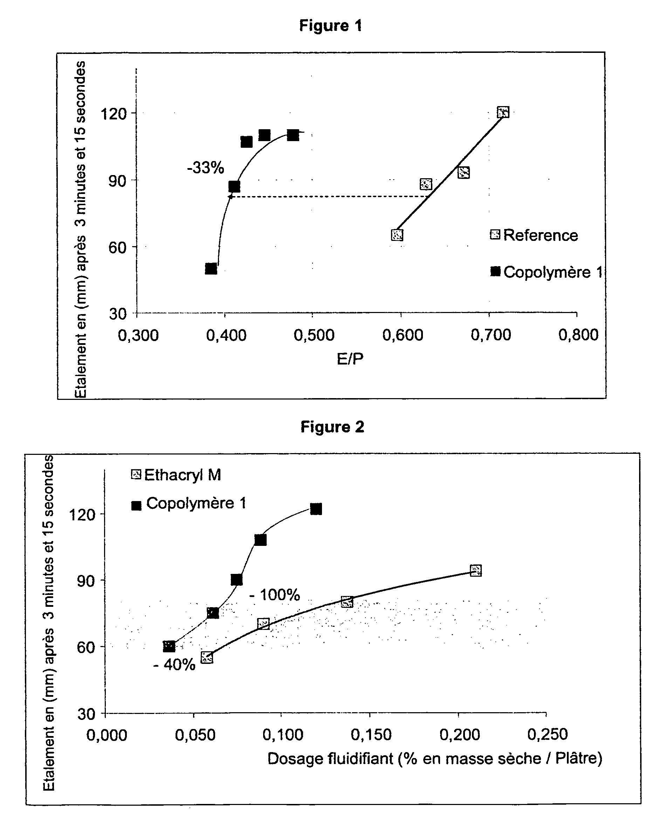

Le pouvoir réducteur d'eau du copolymère 1 est comparé au coulis de référence sans adjuvant (**Figure 1**). Pour cette série d'essais, le dosage en copolymère 1 est constant (0,085 % / Plâtre Selecta naturel origine Lafarge; % en masse sèche de copolymère) mais la quantité d'eau de l'essai (donc le E/P) est variable. Les résultats sont présentés sur la figure 1.

A ce dosage le pouvoir de réduction d'eau est proche de 35% pour un étalement de 90 mm.

Les résultats montrent un meilleur étalement de la pâte liquide en présence du copolymère 1 selon l'invention comparé à la pâte liquide sans adjuvant. La pâte liquide est bien plus fluide en utilisant le copolymère 1.

### Exemple 7 : Evaluation du pouvoir de réduction d'eau des copolymères 1, 2, 2 bis, 3 et 4 et de deux PCP sur pâte liquide de semi-hydrate de sulfate de calcium synthétigue :

La fluidité de la pâte liquide est évaluée de la même manière que précédemment à l'exemple 6, mais avec un anneau Schmitt de largeur 60 mm - Hauteur 50 mm.

A 0.1% de matière active à E/P = 0.5 Plâtre lippendorf synthétique

| | Etalement en mm (Plâtre lippendorf synthétique) |
|---|---|
| Copolymère 1 | 118 |
| Copolymère 2 | 165 |
| Copolymère 2 bis | 160 |
| Copolymère 3 | 140 |
| Copolymère 4 | 150 |
| Copolymère 5 (PCP) | 80 |
| Ethacryl M (PCP, origine Lyondell) | 115 |

### Exemple 8 : Evaluation du pouvoir de réduction d'eau des copolymères 1, 2, 3 et 4 et de deux PCP sur pâte liquide de semi-hydrate de sulfate de calcium Naturel:

La fluidité de la pâte liquide est évaluée de la même manière que précédemment à l'exemple 6, mais avec un anneau Schmitt de largeur 60 mm - Hauteur 50 mm.

A 0.1 % de matière active à E/P = 0.5 Plâtre naturel Selecta

| | Etalement en mm (Plâtre naturel Selecta) |
|---|---|
| Copolymère 1 | 165 |
| Copolymère 2 | 160 |
| Copolymère 3 | 170 |
| Copolymère 4 | 145 |
| Copolymère 5 (PCP) | 75 |
| Ethacryl M (PCP, origine Lyondell) | 100 |

### Exemple 9 : Evaluation de l'effet fluidifiant du copolymère 1 sur pâte liquide de semi-hydrate de sulfate de calcium naturel :

Le pouvoir fluidifiant du copolymère 1 selon l'invention est mesuré en comparaison avec un fluidifiant connu. Le copolymère 1 selon l'invention issu de l'exemple 1 est testé en comparaison avec un fluidifiant commercial (Ethacryl M fourni par la société Lyondell). La masse molaire en poids de ce polymère est de 30000 daltons (Mw) et a été évaluée par SEC aqueuse utilisant un étalonnage POE. Le plâtre est un plâtre β d'origine naturel SELECTA. Le rapport eau/plâtre est constant (E/P = 0,46).

Les résultats sont présentés sur la figure 2.

Les résultats montrent un meilleur étalement de la pâte liquide en présence du copolymère 1 selon l'invention comparé à l'éthacryl M,. La pâte liquide est bien plus fluide en utilisant le copolymère 1. Dans la zone grisée « d'étalements communs », la diminution de dosage, comparativement à l'Ethacryl M, varie de 40 à 100% pour un étalement compris de 60 à 80 mm.

A ce ratio E/P de 0,46, l'efficacité de l'Ethacryl M tend à plafonner (étalement inférieur à 100mm) alors que le copolymère 1 selon l'invention, grâce à son pouvoir de réduction d'eau supérieur, permet d'atteindre des valeurs d'étalement beaucoup plus élevées (supérieur à 120mm).

### Exemple 10 : Quantification du besoin en copolymère 2, PNS et en PCP pour fluidifier une pâte d'un plâtre moussée retardée présentant une proportion d'eau constante.

La quantification du besoin en copolymère 2, et en fluidifiant commercial soit le polynaphtalène sulfonate (PNS Chrysogypflu Ca de chez Chryso) ou l'Ethacryl M (fourni par la société Lyondell) pour fluidifier une pâte de plâtre moussée retardée est réalisée au moyen de différentes pâtes de plâtre formulées dont la teneur en copolymère 2 ou en fluidifiant commercial est ajustée de façon à obtenir une fluidité de pâte équivalente. L'indicateur utilisé pour quantifier le besoin en copolymère 2 ou en fluidifiant commercial est respectivement la masse de copolymère 2 ou de fluidifiant commercial présent dans la pâte divisé par la quantité de plâtre présent dans la pâte.

La pâte de plâtre moussée retardée comprend les composés suivants:
o Du plâtre synthétique obtenu à l'usine Lafarge de Lippendorf ;
o De l'eau ;
o Une solution de régulateur de prise telle que la prise du plâtre soit retardée d'au moins 1 heure ;
o Une solution de fluidifiant (copolymère 2, PNS ou Ethacryl M) dont l'extrait sec peut varier de façon à obtenir une fluidité de pâte constante ;
o Une mousse préparée à partir d'air et d'une solution d'agent moussant.

La mousse introduite dans la pâte retardée est fabriquée dans un générateur de mousse à lit de billes, à partir des composés cités précédemment. Le générateur est choisi de telle façon que pour un débit d'air de 450ml/min et un débit de solution d'agent moussant de 70g/min, le débit de mousse obtenu soit de 478ml/min.

La pâte moussée retardée est obtenue par l'introduction continue de chaque composé dans un malaxeur continu classiquement utilisé par l'homme de l'art. Le malaxeur est généralement constitué d'une chambre cylindrique à l'intérieur de laquelle tourne un rotor à grande vitesse dont les conditions opératoires sont conservées constante d'un essai à l'autre. L'alimentation des constituants se fait par le capot supérieur du malaxeur selon les débits suivants :
o Plâtre d'origine synthétique : 600g/min
o Eau : 250g/min pour l'essai avec le copolymère 2 et 220g/min pour l'essai avec le PCP
o Solution de régulateur de prise : 70g/min
o Solution de fluidifiant : 40g/min pour l'essai avec le copolymère 2 et 70g/min pour l'essai avec l'éthacryl M
o Mousse : 478ml/min
La pâte est soutirée via un tube connecté sur la paroi latérale du malaxeur.

La fluidité de la pâte moussée retardée est évaluée au moyen du test dit de « l'anneau d'étalement ». Un cylindre (encore appelé anneau d'étalement) de taille bien définie (largeur 30mm - Hauteur 50mm) est positionné sur le plan de travail, de manière à ce que le volume délimité par l'intérieur du cylindre et le plan de travail forme une cavité. Cette cavité est complètement remplie de pâte moussée retardée à tester, pâte prélevée à la sortie d'un malaxeur continu. Puis le cylindre est soulevé délicatement. Alors la pâte moussée retardée à tester s'étale sur le plan de travail. Le diamètre du disque formé par la pâte moussée retardée à tester sur le plan de travail est déterminé.

La pâte moussée retardée obtenue par le protocole décrit ci-dessus présente les qualités suivantes :
o Un ratio massique eau/plâtre d'environ 0,72 ;
o Un diamètre d'étalement de 200mm ou 170 mm ;
o Une densité d'environ 1g/cm³ ou 0,72g/cm³ ;
Pour atteindre une telle qualité de pâte, les extraits secs des solutions de fluidifiants doivent être adaptés de façon à tenir compte de leur pouvoir de fluidification respectif.

Deux expériences ont été réalisées en utilisant successivement du copolymère 2, du PNS et de l'éthacryl M comme agent fluidifiant, les résulats sont présentés ci-dessous :

| | Dosage (% en matière sèche) | Etalement en mm |
|---|---|---|
| Copolymère 2 | 0,027 | 170 |
| Copolymère 2 | 0,042 | 200 |
| PNS | 0,145 | 170 |
| Ethacryl | 0,143 | 200 |

Pour un étalement de 170 mm, l'indicateur de besoin en fluidifiant est de 0.027% dans le cas du copolymère 2 et de 0.145% dans le cas du PNS, montrant que le copolymère 2 présente une efficacité significativement supérieure à celle du PNS. Pour un étalement de 200 mm, l'indicateur de besoin en fluidifiant est de 0.042% dans le cas du copolymère 2 et de 0.143% dans le cas du l'éthacryl M, montrant que le copolymère 2 présente une efficacité significativement supérieure à celle de l'éthacyl M.

### Exemple 11 : Comparaison de l'évaluation du pouvoir fluidifiant du copolymère 2 et d'un PNS pour fluidifier une pâte d'un plâtre moussée retardée.

L'évaluation du pouvoir fluidifiant du copolymère 2 et d'un polynaphtalène sulfonate (PNS Chrysogypflu Ca de chez Chryso) pour fluidifier une pâte de plâtre moussée retardée est réalisée au moyen de différentes pâtes de plâtre formulées dont la teneur en eau est ajustée de façon à obtenir une fluidité de pâte équivalente. L'indicateur utilisé pour quantifier le pouvoir fluidifiant du copolymère 2 ou du PNS est le ratio des masses d'eau et de plâtre présent dans la pâte.

La pâte de plâtre moussée retardée est le résultat du mélange homogène de plusieurs composants :
o Du plâtre synthétique obtenu à l'usine Lafarge de Lippendorf
o De l'eau
o Une solution de régulateur de prise telle que la prise du plâtre soit retardée d'au moins 1 heure
o Une solution de fluidifiant à base de copolymère 2 ou de PNS avec un extrait sec de 1.24%
o Une mousse préparée à partir d'air et d'une solution d'agent moussant, la concentration de la solution en agent moussant étant au moins égale à la concentration micellaire critique du produit utilisé

La mousse introduite dans la pâte retardée est fabriquée dans un générateur de mousse à lit de billes statiques, à partir des composants cités précédemment. Le générateur est choisi de telle façon que pour un débit d'air de 450ml/min et un débit de solution d'agent moussant de 70g/min, le débit de mousse obtenu soit de 478ml/min.

La pâte moussée retardée est obtenue par l'introduction continue de chaque composants dans un malaxeur continu classiquement utilisé par l'homme de l'art. Le malaxeur est généralement constitué d'une chambre cylindrique à l'intérieur de laquelle tourne un rotor à grande vitesse dont les conditions opératoires sont conservées constante d'un essai à l'autre. L'alimentation des composants se fait par le capot supérieur du malaxeur selon les débits suivants :
o Plâtre d'origine synthétique : 600g/min
o Eau : débit variable
o Solution de régulateur de prise : 70g/min
o Solution de fluidifiant : 70g/min
o Mousse : 478ml/min

La pâte est soutirée via un tube connecté sur la paroi latérale du malaxeur.

La fluidité de la pâte moussée retardée est évaluée au moyen du test dit de « l'anneau d'étalement ». Un cylindre (encore appelé anneau d'étalement) de taille bien définie (largeur 30mm - Hauteur 50mm) est positionné sur le plan de travail, de manière à ce que le volume délimité par l'intérieur du cylindre et le plan de travail forme une cavité. Cette cavité est complètement remplie de pâte moussée retardée à tester, pâte prélevée à la sortie d'un malaxeur continu. Puis le cylindre est soulevé délicatement. Alors la pâte moussée retardée à tester s'étale sur le plan de travail. Le diamètre du disque formé par la pâte moussée retardée à tester sur le plan de travail est déterminé.

La pâte moussée retardée obtenue par le protocole décrit ci-dessus présente les qualités suivantes :
o Un ratio massique fluidifiant/plâtre d'environ 0.14%
o Un diamètre d'étalement de 200mm
o Une densité d'environ 0.72g1cm³

Pour atteindre une telle qualité de pâte moussée retardée, sa teneur doit être adaptée de façon à tenir compte du pouvoir de fluidification respectif du copolymère 2 et du PNS. Deux expériences ont été réalisées en utilisant successivement du copolymère 2 et du PNS comme agent fluidifiant. Les résultats sont présentés dans le tableau ci-dessous :

| | Ratio E/P (Eau / plâtre) | Dosage % en matière sèche | Etalement en mm |
|---|---|---|---|
| Copolymère 2 | 0,5 | 0,014 | 200 |
| PNS | 0,72 | 0,014 | 200 |

Dans le cas du copolymère 2 et du PNS, le ratio massique eau/plâtre de la pâte moussée retardée est respectivement de 0.5 et de 0.72, montrant que le copolymère 2 présente une efficacité significativement supérieure à celle du PNS.

### Exemple 12 : Evaluation du pouvoir de fluidification du copolymère 2 sur pâte liquide de carbonate de calcium ou de gypse.

La fluidité de la pâte liquide est évaluée de la même manière que précédemment à l'exemple 6, mais avec un anneau Schmitt de largeur 60 mm - Hauteur 50 mm.

Les essais sont réalisés avec du copolymère 2 (proportion de matière active donnée dans le tableau ci-dessous), avec un ratio eau sur solide de E/S = 0,5, la fraction solide étant successivement du carbonate de calcium (Durcal 1 et Durcal 10) et du gypse (gypse FGD synthétique, fractions 0-63µm et 100-200µm). Les résultats sont présentés dans le tableau ci-dessous :

| | **Dosage de matière active du polymère 2** | |
|---|---|---|
| **Fraction solide** | 0% | 0.1% |
| Durcal 1 | *83* | *175* |
| Durcal 10 | *233* | *310* |
| Gypse 0-63µm | *210* | *300* |
| Gypse 100-200µm | *185* | *Forte sédimentation* |

## Revendications

1. Utilisation d'au moins un copolymère ou un de ses sels en tant que fluidifiant pour liants hydrauliques à base de sulfate de calcium choisi parmi les plâtres à base de sulfate de calcium hemihydraté (α ou β ou un mélange des deux) ou les liants à base de sulfate de calcium anhydre, ledit copolymère comprenant au moins un motif de formule (I) 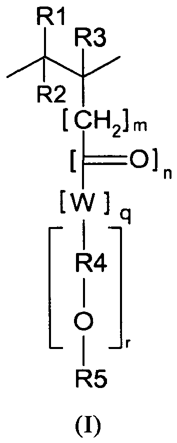 et ledit copolymère comprenant au moins un motif de formule (II) 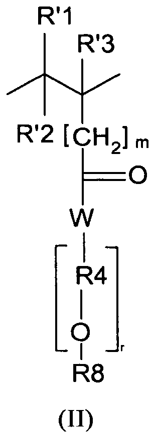 R1, R2, R3 représentent indépendamment un atome d'hydrogène, un radical alkyle linéaire ou ramifié en C₁ à C₂₀, ou un radical phényle ;
R'1, R'2, R'3 représentent indépendamment un atome d'hydrogène, un radical alkyle linéaire ou ramifié en C₁ à C₂₀, ou un radical phényle, ou un radical -COOR9 avec R9 représentant indépendamment un atome d'hydrogène, un radical alkyle linéaire ou ramifié en C₁ à C₄ ou un ion monovalent divalent ou trivalent ou un radical ammonium quaternaire;
R4 représente un radical alkyle linéaire ou ramifié en C₂ à C₂₀ ;
R5 représente un radical de formule 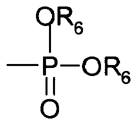 R6 représente indépendamment un atome d'hydrogène, un radical alkyle linéaire ou ramifié en C₁ à C₂₀, ou un ion monovalent divalent ou trivalent, ou un radical ammonium quaternaire ;
ou encore R5 représente un radical de formule 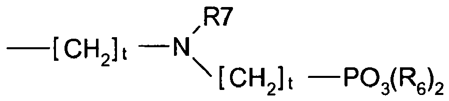 R7 représente un atome d'hydrogène, un radical alkyle linéaire ou ramifié en C₁ à C₁₈, ou un radical de formule
-[CH₂]ₜ -PO₃(R₆)₂
R8 représente un atome d'hydrogène ou un radical alkyle linéaire ou ramifié en C₁ à C₂₀ ;
W représente indépendamment un atome d'oxygène ou un radical NH;
m est un nombre entier compris de 0 à 2 ;
n est un nombre entier égal à 0 ou 1 ;
q est un nombre entier égal à 0 ou 1 ;
r est un nombre entier compris de 1 à 300 ;
t est un nombre entier compris de 0 à 18 ;
et ledit copolymère comprenant au moins un motif de formule (III)
choisi parmi les acides carboxyliques insaturés tels que les monomères insaturés d'acide monocarboxylique ou dicarboxylique, tels que l'acide acrylique, l'acide méthacrylique, l'acide maléique, l'anhydride maléique, l'acide fumarique, l'acide itaconique, l'anhydride itaconique, l'acide citraconique, et leurs sels de métaux monovalents, divalents, d'ammonium quaternaire ou leurs sels d'amine organique ;
dont la masse molaire dudit copolymère est comprise 15 000 à 250 000 daltons,
ledit copolymère ne comprenant pas de motifs réticulant, c'est-à-dire de motifs comportant au moins deux fonctions ayant polymérisées pour conduire à la réticulation des chaînes polymères ;
et ledit copolymère selon l'invention comprenant :
- de 20 à 80 % de motifs (I);
- de 5 à 35 % de motifs (II);
- de 20 à 60% de motif (III)
les pourcentages étant exprimés en nombre d'unités de motifs par rapport au nombre total de motifs présents dans le copolymère.

2. Utilisation selon la revendication 1 **caractérisée en ce que** l'on utilise ledit copolymère possédant un radical R5 représentant un radical de formule

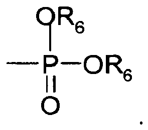

3. Utilisation selon la revendication 1 **caractérisée en ce que** l'on utilise ledit copolymère possédant un radical R8 représentant un atome d'hydrogène ou un radical méthyle.

4. Utilisation selon la revendication 1 **caractérisée en ce que** l'on utilise ledit copolymère pour lequel W représente un atome d'oxygène.

5. Liant hydraulique à base de sulfate de calcium comprenant au moins un copolymère ou un de ses sels selon la revendication 1.

6. Utilisation d'un liant hydraulique selon la revendication 5 pour la fabrication d'éléments pour le domaine de la construction.

7. Eléments pour le domaine de la construction obtenus à partir d'un liant hydraulique à base de sulfate de calcium comprenant au moins un copolymère ou un de ses sels selon la revendication 1.

## Patentansprüche

1. Verwendung mindestens eines Copolymers oder eines seiner Salze als Verflüssiger für hydraulische Bindemittel auf der Basis von Calciumsulfat, ausgewählt aus den Gipsen auf der Basis von Calciumsulfat-Halbhydrat (α oder β oder eine Mischung der beiden) oder den Bindemitteln auf der Basis von wasserfreiem Calciumsulfat, wobei das Copolymer mindestens eine Einheit der Formel (I) 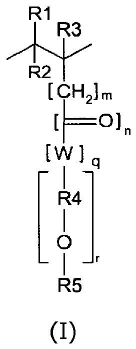 enthält und das Copolymer mindestens eine Einheit der Formel (II) 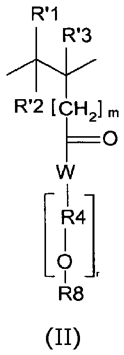 enthält, wobei
R1, R2, R3 unabhängig ein Wasserstoffatom, ein lineares oder verzweigtes C₁- bis C₂₀-Alkylradikal oder ein Phenylradikal darstellen;
R'1, R'2, R'3 unabhängig ein Wasserstoffatom, ein lineares oder verzweigtes C₁- bis C₂₀-Alkylradikal oder ein Phenylradikal oder ein Radikal -COOR9 darstellen, wobei R9 unabhängig ein Wasserstoffatom, ein lineares oder verzweigtes C₁- bis C₄-Alkylradikal oder ein monovalentes, bivalentes oder trivalentes Ion oder ein quaternäres Ammoniumradikal darstellt;
R4 ein lineares oder verzweigtes C₂- bis C₂₀-Alkylradikal darstellt;
R5 ein Radikal der Formel 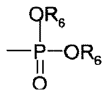 darstellt,
R6 unabhängig ein Wasserstoffatom, ein lineares oder verzweigtes C₁- bis C₂₀-Alkylradikal oder ein monovalentes, bivalentes oder trivalentes Ion oder ein quaternäres Ammoniumradikal darstellt;
oder auch R5 ein Radikal der Formel 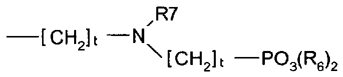 darstellt,
R7 ein Wasserstoffatom, ein lineares oder verzweigtes C₁- bis C₁₈-Alkylradikal oder ein Radikal der Formel
-[CH₂]ₜ -PO₃(R₆)₂
darstellt,
R8 ein Wasserstoffatom oder ein lineares oder verzweigtes C₁- bis C₂₀-Alkylradikal darstellt;
W unabhängig ein Sauerstoffatom oder ein NH-Radikal darstellt;
m eine ganze Zahl zwischen 0 und 2 ist;
n eine ganze Zahl gleich 0 oder 1 ist;
q eine ganze Zahl gleich 0 oder 1 ist;
r eine ganze Zahl zwischen 1 und 300 ist;
t eine ganze Zahl zwischen 0 und 18 ist;
und das Polymer mindestens eine Einheit der Formel (III) enthält,
die ausgewählt ist aus den ungesättigten Carboxylsäuren wie den ungesättigten Monomeren von Monocarboxyl- oder Dicarboxylsäure, wie Acrylsäure, Methacrylsäure, Maleinsäure, Maleinanhydrid, Fumarsäure, Itaconsäure, Itaconanhydrid, Citraconsäure, und ihren monovalenten Metallsalzen, bivalenten Metallsalzen, quaternären Ammoniumsalzen oder ihren organischen Aminsalzen;
wobei die Molmasse des Copolymers zwischen 15 000 und 250 000 Dalton liegt, wobei das Copolymer keine vernetzenden Einheiten enthält, das heißt Einheiten, die mindestens zwei Funktionen aufweisen, die polymerisiert haben, um zur Vernetzung der Polymerketten zu führen;
und das erfindungsgemäße Copolymer Folgendes enthält:
20 bis 80% der Einheiten (I);
5 bis 35% der Einheiten (II);
20 bis 60% der Einheiten (III);
wobei die Prozentsätze als Anzahl der Einheiten bezogen auf die Gesamtanzahl der im Copolymer vorhandenen Einheiten ausgedrückt sind.

2. Verwendung nach Anspruch 1, **dadurch gekennzeichnet, dass** das Copolymer verwendet wird, das ein Radikal R5 besitzt, welches ein Radikal der Formel 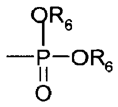 darstellt.

3. Verwendung nach Anspruch 1, **dadurch gekennzeichnet, dass** das Copolymer verwendet wird, das ein Radikal R8 besitzt, welches ein Wasserstoffatom oder ein Methylradikal darstellt.

4. Verwendung nach Anspruch 1, **dadurch gekennzeichnet, dass** das Copolymer verwendet wird, bei dem W ein Sauerstoffatom darstellt.

5. Hydraulisches Bindemittel auf der Basis von Calciumsulfat, das mindestens ein Copolymer oder eines seiner Salze nach Anspruch 1 enthält.

6. Verwendung eines hydraulischen Bindemittels nach Anspruch 5 zur Herstellung von Elementen für das Bauwesen.

7. Elemente für das Bauwesen, die ausgehend von einem hydraulischen Bindemittel auf der Basis von Calciumsulfat, das mindestens ein Copolymer oder eines seiner Salze nach Anspruch 1 enthält, hergestellt werden.

## Claims

1. Use of at least one copolymer or one of its salts as a fluidifier for hydraulic binders based on calcium sulphate chosen from plasters based on calcium sulphate hemihydrate (α or β or a mixture of the two) or binders based on anhydrous calcium sulphate, said copolymer comprising at least one entity of formula (I) 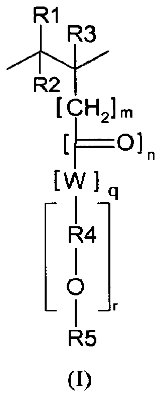 and said copolymer comprising at least one entity of formula (II) 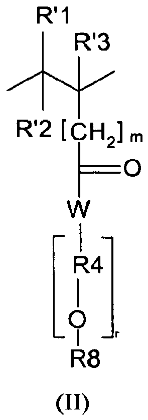 R1, R2 and R3 independently represent a hydrogen atom, a linear or branched C₁ to C₂₀ alkyl radical, or a phenyl radical;
R'1, R'2 and R'3 independently represent a hydrogen atom, a linear or branched C₁ to C₂₀ alkyl radical, or a phenyl radical, or a -COOR9 radical with R9 independently representing a hydrogen atom, a linear or branched C₁ to C₄ alkyl radical or a monovalent, divalent or trivalent ion or a quaternary ammonium radical;
R4 represents a linear or branched C₂ to C₂₀ alkyl radical;
R5 represents a radical of formula 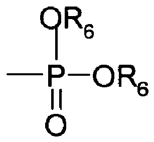 R6 independently represents a hydrogen atom, a linear or branched C₁ to C₂₀ alkyl radical, or a monovalent, divalent or trivalent ion, or a quaternary ammonium radical;
or R5 also represents a radical of formula 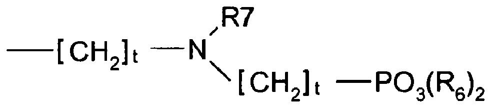 R7 represents a hydrogen atom, a linear or branched C₁ to C₁₈ alkyl radical, or a radical of formula
-[CH₂]ₜ -PO₃(R₆)₂
R8 represents a hydrogen atom or a linear or branched C₁ to C₂₀ alkyl radical;
W independently represents an oxygen atom or an NH radical;
m is an integer from 0 to 2, inclusive;
n is an integer equal to 0 or 1;
q is an integer equal to 0 or 1;
r is an integer from 1 to 300, inclusive;
t is an integer from 0 to 18, inclusive;
and said copolymer comprising at least one entity of formula (III) chosen from unsaturated carboxylic acids such as unsaturated monomers of monocarboxylic or dicarboxylic acid, such as acrylic acid, methacrylic acid, maleic acid, maleic anhydride, fumaric acid, itaconic acid, itaconic anhydride, citraconic acid, and their salts of monovalent or divalent metals, of quaternary ammonium or their salts of an organic amine;
for which the molar mass of said copolymer is from 15,000 to 250,000 daltons, said copolymer not comprising crosslinking entities, that is to say entities having at least two functional groups which have polymerised to result in the crosslinking of the polymer chains;
and said copolymer according to the invention comprising:
- from 20 to 80 % of entities (I);
- from 5 to 35 % of entities (II);
- from 20 to 60 % of entities (III);
the percentages being expressed as number of unit entities with respect to the total number of entities present in the copolymer.

2. Use according to claim 1, **characterised in that** said copolymer having an R5 radical representing a radical of formula 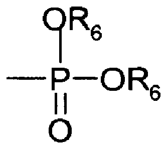 is used.

3. Use according to claim 1, **characterised in that** said copolymer having an R8 radical representing a hydrogen atom or a methyl radical is used.

4. Use according to claim 1, **characterised in that** said copolymer for which W represents an oxygen atom is used.

5. Hydraulic binder based on calcium sulphate, comprising at least one copolymer or one of its salts according to claim 1.

6. Use of a hydraulic binder according to claim 5 for manufacturing elements for the field of construction.

7. Elements for the field of construction, obtained from a hydraulic binder based on calcium sulphate comprising at least one copolymer or one of its salts according to claim 1.
